# EUROPEAN PATENT SPECIFICATION

(11) **EP 1 106 976 B1**
(45) Date of publication and mention of the grant of the patent: **02.05.2003**
(21) Application number: 99830748.2
(22) Date of filing: 01.12.1999
(51) Int. Cl.: G01F 23/02

(54) **A level indicator for apparatus under pressure**
Füllstandsgeber für Druckgeräte
Indicateur de niveau pour appareils sous pression

(43) Date of publication of application: 13.06.2001
(73) Proprietor: Bertolini, Rossella, 20159 Milano (IT)
(72) Inventor: Bertolini, Rossella, 20159 Milano (IT)
(74) Representative: Long, Giorgio

(56) References cited:
- EP-A- 0 344 337
- CH-A- 280 285
- US-A- 2 480 070
- US-A- 3 817 205

## Description

The present invention relates to a level indicator particularly for apparatus under pressure, for example, boilers containing hot water, saturated vapour, or diathermic oil at fairly high pressure and temperature, for example, from 16 to 100 bars and up to 250/300°C.

Level indicators of the type constituted by a one-piece metal body in the form of an elongate bar, generally of rectangular cross-section, in which a cavity of a length less than that of the bar is drilled to form a housing for the fluid, are known.

The cavity terminates in two ducts which open at the two ends of the bar for connection to two hollow cylindrical pins to be connected to the apparatus under pressure, generally by means of members for shutting off the fluid.

The body of the indicator is closed at the front by a glass display window which is connected to the metal body with the interposition of a resilient seal.

A technical problem posed by indicators of this type is that of ensuring perfect sealing of the glass closure when the indicator contains liquids which are under pressure and are subject to temperature fluctuations.

For this purpose, a clamping structure by means of which the display window is coupled sealingly with the body of the indicator, after an above-mentioned seal has been interposed between them, is used.

In the prior art, ties of various types have been proposed for this structure, for example, a pair of lateral ties engaged at one end with a tensioning mechanism acting on the body of the indicator and at the other end with a plate having a slot coupled with the display window by means of a second seal.

However, these ties have various disadvantages, amongst which is the disadvantage that, with the passage of time, their ends tend to open out under the effect of the pressure inside the indicator, with a consequent loss of sealing.

To prevent these problems, in the prior art, a housing and clamping structure formed by a portion of metal tube of rectangular cross-section with a front wall, a rear wall and two side walls of a length substantially equal to the length of the indicator body has been proposed.

A slot of a suitable length for displaying the liquid level is formed in an intermediate position in the front wall.

The indicator body and the respective closure window are housed inside the tube, after a resilient seal has been interposed between the glass and the front wall, together with a clamping plate interposed between the rear wall and the opposite face of the indicator body to the drilled cavity.

The clamping plate has threaded seats distributed along its longer dimension for clamping bolts which extend freely through holes in the rear wall of the tube.

The clamping bolts, which are screwed into the clamping plate, push against the indicator body, urging it against the glass which in turn is restrained by the front wall of the housing tube by means of the resilient seal.

Although this housing and clamping structure is satisfactory from the point of view of the leaktightness of the instrument, it has the serious disadvantage that, in practice, it is extremely difficult to remove the housing tube in order to open the indicator.

This makes operations to maintain and/or replace the elements inside the instrument such as, for example, the display glass, difficult to perform.

Moreover, it should be noted that, in the indicator described above, in order to render the internal elements accessible, it is necessary to remove the housing tube longitudinally after the clamping bolts have been slackened.

However, if the indicator is mounted in series with other similar modules, the above-mentioned operation cannot be performed without disconnecting the connections between the modules and with the tank.

The level indicator described above is therefore disadvantageously not suitable for being mounted in series.

US 2,480,070 discloses liquid level gauges for indicating the level of a liquid in a boiler having a member with apertures in the opposite ends thereof and a channel in one face thereof extending to connect with said apertures, a transparent plate covering said channel, a U-shaped frame member embracing said transparent plate and channel member, said frame including a slotted front plate and side plates extending in rear of the channel member and provided with series of apertures in the opposite sides of the reardwardly extending portion, a series of screws each swivelled to the rear face of said channel member, an oblong plate threadely engaging each screw adapted when turned in one direction to pass between the sides of said frame and when turned transversely to engage opposite apertures in said sides and to transmit clamping stress from said screws to said frame.

The technical problem upon which the present invention is based is that of providing a level indicator which overcomes the disadvantages complained of above with reference to the prior art, that is, a level indicator which ensures that the glass closure is completely leaktight, even when the indicator contains liquids subject to high pressures and to temperature fluctuations and which, at the same time, affords easy access to the internal structural elements for maintenance and/or replacement operations.

This problem is solved by a visual indicator of the level of a liquid contained in apparatus according to claim 1.

In the indicator according to the invention, the above-mentioned portions of the tubular housing structure may be removable in any direction transverse the longitudinal axis of the basic body, and the direction is not limited to a direction perpendicular to this longitudinal axis.

The characteristics and advantages of the present invention will become clearer from the following description of a preferred embodiment, given with reference to the appended drawings, in which:

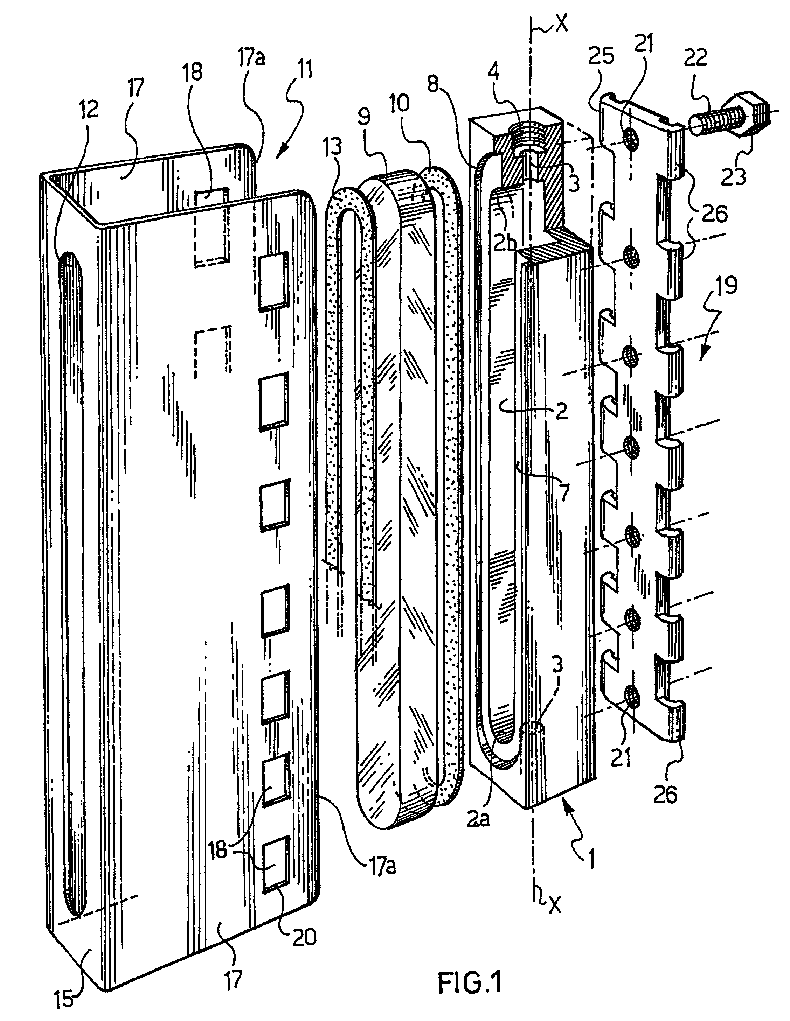

Figure 1 is an exploded, perspective view of a level indicator according to the invention in the configuration of a modular element,

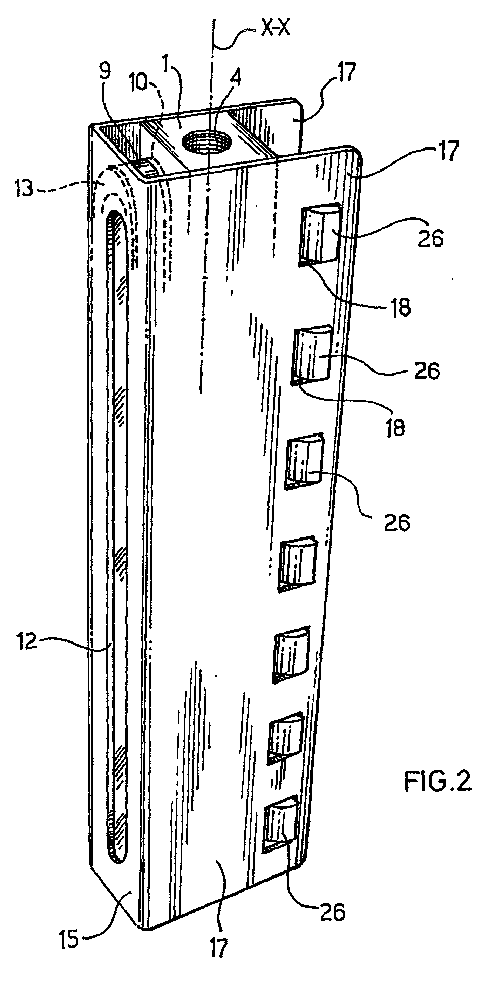

Figure 2 shows the level indicator of the previous drawing, in perspective, in the assembled condition,

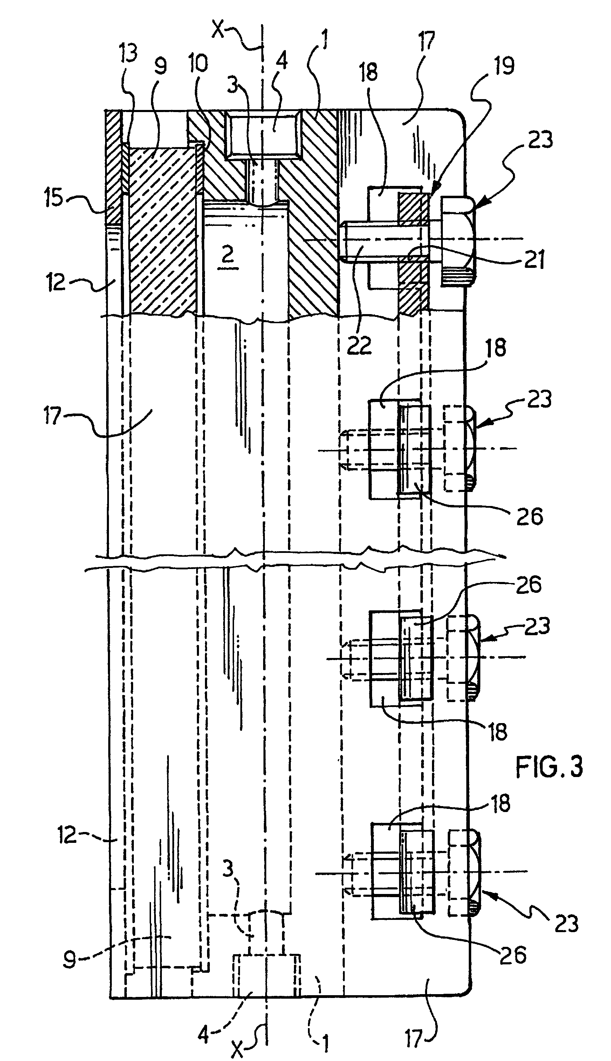

Figure 3 is an enlarged, cut-away side view of the level indicator of Figure 2, in the assembled condition,

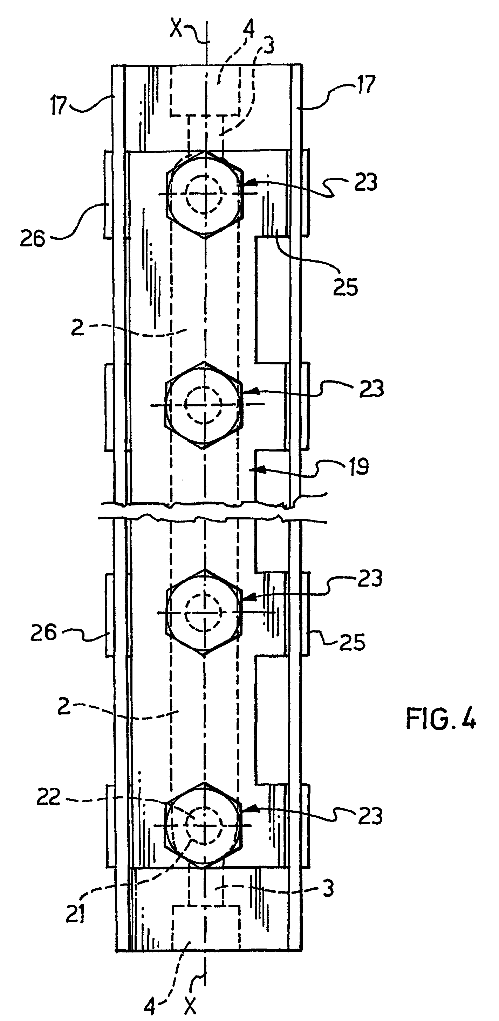

Figure 4 is an enlarged, cut-away rear view of the level indicator of Figure 2, in the assembled condition,
Figure 5 shows the level indicator of Figure 2 in cross-section,
Figure 6 shows the level indicator of Figure 2 in cross-section, in a partially open configuration, and
Figure 7 is a schematic view of a plurality of indicators according to the previous drawings connected in series with one another and mounted on a tank.

With reference to the drawings, a basic body, indicated 1, of the indicator has a cavity 2 which extends along the longitudinal axis X-X of the basic body 1. In practice, the cavity 2 is constituted by a channel, of which the lower end portion 2a has a threaded hole 3 and the upper portion 2b has a corresponding threaded hole 4, preferably aligned with the hole 3.

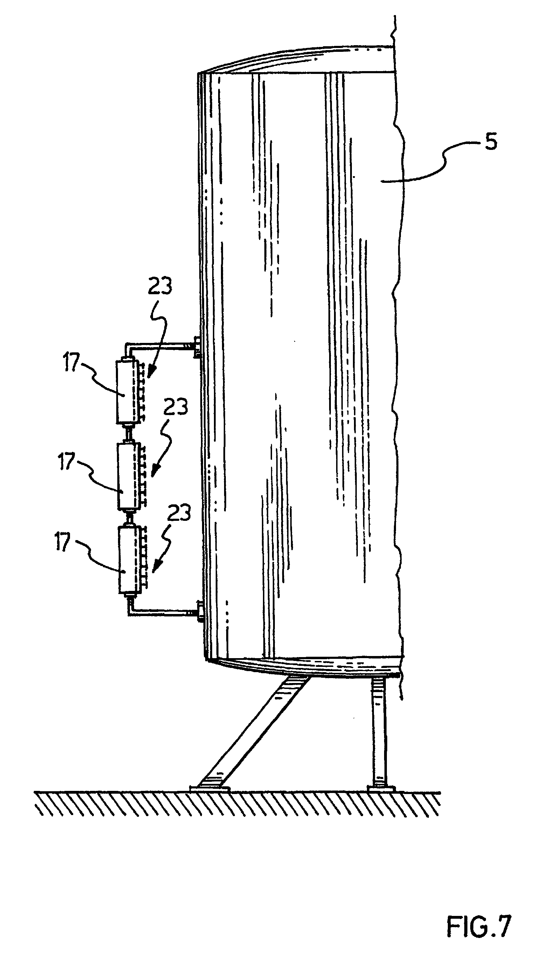

In the region of the upper and lower end portions 2b and 2a, the basic body 1, and hence the cavity 2, are connected, by means of the threaded holes 3, and 4, to other similar bodies, which are considered as modules, or directly to apparatus under pressure, for example, a tank containing water under pressure, shown schematically in Figure 7 and indicated 5 in that drawing, for monitoring of the level of the water contained therein.

The connection is made by means of connecting members which are not shown since they are wholly conventional.

In the front portion of the basic body 1 which is intended to display the liquid level, there is a longitudinal window 7.

This window, which has a step 8, is closed in a leaktight manner by a conventional transparent element 9, for example, a piece of glass which can withstand the temperatures and pressures to which the liquid is subject.

A first seal 10 is preferably interposed between the transparent element 9 and the longitudinal window 7 to improve the leaktightness of the instrument.

The indicator according to the invention also comprises a tubular structure for housing the basic body 1 and the transparent element 9 and) comprises a metal body 11 and a pressure plate 19 which, as will be described below, are connected in a manner such as to be removable transversely relative to the longitudinal axis X-X of the basic body 1.

The metal body 11 has a liquid-display opening or slot 12 in alignment with the window 7 in the basic body 1, and a second seal 13 is preferably disposed between the metal body 11 and the transparent element 9.

The above-mentioned metal body 11 is substantially U-shaped with a right-angled cross-section and comprises a front wall 15 having the slot 12 and two side walls 17.

For example, the metal body 11 may be a piece of sheet-metal of suitable thickness bent so as to be U-shaped by conventional methods.

Each of the side walls 17 has, in the vicinity of its longitudinal free edge 17a, a plurality of openings or slots 18, the function of which will become clearer from the following part of the present description.

The pressure plate 19 has a rectangular cross-section and has a series of threaded holes 21 housing suitable means for clamping together the structural elements of the indicator mentioned up to now.

The above-mentioned means are represented by shanks 22 of respective screws 23.

The pressure plate 19 also has a series of first appendages or projections 25 and a series of second appendages or projections 26, projecting from respective longitudinal edges of the plate 19.

The first appendages 25 have a greater transverse extent than the second appendages 26 and both can engage respective abutment surfaces 20 of the windows 18 in the vicinity of the free edges 17a of the side walls 17.

According to a preferred embodiment, the first and second appendages 25 and 26 are hook-shaped with respective longitudinal channels 27 for engaging respective abutment surfaces 20 and respective edges 28 for engaging respective side walls 17.

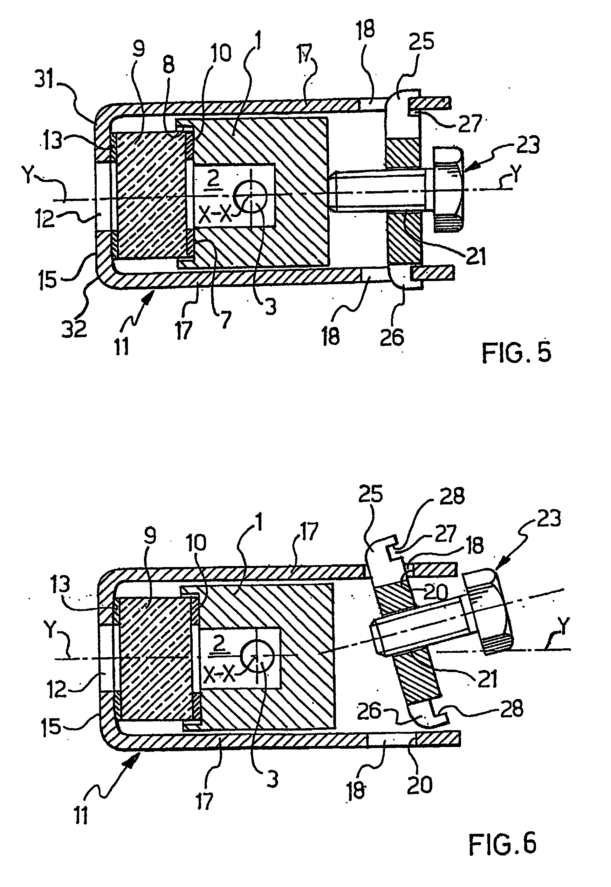

As can clearly be seen in the cross-section of Figure 6, during the assembly of the structural elements of the level indicator according to the invention, the pressure plate 19 is first of all inclined to the transverse axis Y-Y of the basic body 1 so as to insert the first appendages 25 in the corresponding slots 18 of a side wall 17, and is then brought to a position parallel to the axis X-X in order to insert the second appendages 26 in the corresponding slots 18 of the opposite side wall 17.

This operation is possible because the transverse extent of the pressure plate 19 with any one of the appendages 26 is less than the distance between the internal surfaces of the side walls 17.

To ensure the necessary contact pressure and perfect leaktightness of the indicator according to the present invention, the clamping screws 23 are screwed into the threaded holes 21 of the pressure plate 19 until they act on the body of the indicator 1, urging it against the transparent element 9 and thus compressing the first seal 10.

The screwing of the screws 23 into the threaded holes 21 at the same times leads to a movement of the pressure plate 19 in the opposite direction to the direction of screwing, enabling the channels 27 to engage the bearing surfaces 20, thus forming a male-female coupling between complementary profiles.

At the same time, the edges 28 of the first and second appendages 25 and 26 engage the side walls 17, advantageously preventing any transverse movement of the pressure plate 19.

The thrust exerted by the screws 23 on the indicator body 1 is opposed by portions 31 and 32 of the front wall 15 which exert an equal and opposite reaction on the display glass 9, by means of the second seal 13.

The reaction exerted on the screws 23 by the indicator body 1, is in turn transferred to the pressure plate 19.

Naturally, the side walls 17 of the metal body 11 are subject to tensile stress transverse the longitudinal axis X-X.

Added to this tensile stress is a bending moment which would tend to cause the structure to open out, moving the side walls 17 away from one another.

However, this movement is resisted by the appendages 25 and 26 which engage the side walls as described above, preventing movement of the walls 17 and reducing the deformation of the structure to a minimum.

In the level indicator according to the invention, an optimal distribution of the compression forces in the structure is thus achieved, ensuring that the glass closure is perfectly leaktight and, at the same time, rendering the structure stable over time.

The level indicator according to the invention is advantageously also compact, has excellent visibility and good reliability.

The main advantage of the level indicator according to the invention, however, lies in the fact that it is easy to assemble and to dismantle.

In particular, the level indicator according to the invention can be opened easily if necessary for maintenance or replacement of the internal elements, even when the indicator is mounted in series with other similar modules in the arrangement shown, for example in Figure 7, without the need to disconnect the connections between the modules and with the tank.

In fact, after the screws 23 have been removed, the pressure plate 19 can be removed from the slots 18 transversely relative to the longitudinal axis X-X and the metal body 11 can be removed in the same manner, thus affording access to the seals and the transparent elements 9 of the modules on which it is necessary to operate.

In order to satisfy contingent and specific requirements, an expert in the art may apply to the level indicator according to the invention many modifications and variations relating to the shape and size of the housing structure, of the slots, of the pressure plate, of the appendages of the plate etc., all of which, however, are included within the scope of protection of the appended claims.

For example, a variant of the tubular housing structure formed by two releasably connected U-shaped elements may be provided.

## Claims

1. A visual indicator suitable for measuring the level of a liquid contained in apparatus (5), comprising a basic body (1) extending predominantly along a longitudinal axis (X-X) to be arranged vertically and having a cavity (2), a longitudinal window (7) which exposes a portion of the cavity (2) for inspection of the liquid and, at each end, ducts (3, 4) for putting the cavity (2) into communication with the apparatus (5), a transparent element (9), a tubular housing structure (11, 19) for containing the transparent element (9) and the basic body (1), and clamping means (23) cooperating with the tubular structure (11, 19) in order to couple the transparent element (9) with the longitudinal window (7) in a leaktight manner and so that said tubular housing structure (11, 19) and transparent element (9) are substantially parallel to said longitudinal axis (X-X), the tubular structure (11, 19) comprising a first portion (11) and a second portion (19) connected to one another in a manner such as to be removable transversely relative to the longitudinal axis (X-X), the first portion (11) having a slot (12) for displaying the liquid, and the first portion (11) comprising a substantially U-shaped metal body (11) of right angled cross-section, having a front wall (15) which has the slot (12) and two side walls (17) having longitudinal free edges (17a), the second portion comprising a pressure plate (19) to be urged against the basic body (1) from the free side of the U-shaped metal body (11) opposed to the front wall (15) by means of said clamping means (23), the side walls (17) having a plurality of slots (18) with abutment surfaces (20) in the vicinity of the longitudinal free edges (17a), and the pressure plate (19) comprising a plurality of appendages (25, 26) in engagement with the abutment surfaces (20), **characterized in that** the appendages (25, 26) comprise a plurality of first appendages (25) and second appendages (26) projecting from opposite longitudinal edges of the pressure plate (19), the second appendages (26) having a transverse extent less than that of the first appendages (25).

2. A level indicator according to Claim 1, in which the transverse extent of the pressure plate (19) with any one of the second appendages (26) is less than the distance between the internal surfaces of the side walls (17).

3. An indicator according to Claim 2, in which the first and second appendages (25, 26) are hook-shaped and each has a longitudinal channel (27) in engagement with an abutment surface (20) and an edge (28) in engagement with a side wall (17).

4. A level indicator according to any one of Claims 1 to 3, in which the pressure plate (19) has threaded holes (21) and the clamping means are constituted by screws (23) screwed into the threaded holes (21) and pressing against the basic body (1).

5. An indicator according to any one of the preceding claims, in which the transparent element (9) is superimposed on the longitudinal window (7) of the basic body (1) with the interposition of a first seal (10).

6. A level indicator according to any one of Claims 1 to 5, in which a second seal (13) is interposed between the transparent element (9) and the front wall (15).

## Patentansprüche

1. Sichtanzeigeeinrichtung, die zum Messen des Pegels einer in einer Vorrichtung (5) enthaltenen Flüssigkeit geeignet ist und einen Grundkörper (1), der sich überwiegend entlang einer Längsachse (X-X), die vertikal anzuordnen ist, erstreckt, und einen Hohlraum (2), einen Längsausschnitt (7), der einen Teil des Hohlraums (2) zum Prüfen der Flüssigkeit freilegt, und an jedem Ende Leitungen (3, 4) aufweist, durch die der Hohlraum (2) mit der Vorrichtung (5) in Verbindung gebracht wird, ein transparentes Element (9), eine röhrenförmige Gehäusestruktur (11, 19), die das transparente Element (9) und den Grundkörper (1) aufnimmt, sowie eine Klemmeinrichtung (23) umfasst, die mit der röhrenförmigen Struktur (11, 19) zusammenwirkt, um das transparente Element (9) auslaufdicht mit dem Längsausschnitt (7) zu verbinden, und zwar so, dass die röhrenförmige Gehäusestruktur (11, 19) und das transparente Element (9) im Wesentlichen parallel zu der Längsachse (X-X) sind, wobei die röhrenförmige Struktur (11, 19) einen ersten Abschnitt (11) und einen zweiten Abschnitt (19) umfasst, die so miteinander verbunden sind, dass sie in Querrichtung in Bezug auf die Längsachse (X-X) entfernt werden können, wobei der erste Abschnitt (11) einen Schlitz (12) zum Anzeigen der Flüssigkeit aufweist und der erste Abschnitt (11) einen im Wesentlichen U-förmigen Metallkörper (11) mit rechteckigem Querschnitt umfasst, der eine Vorderwand (15), die den Schlitz (12) aufweist, und zwei Seitenwände (17) mit freien Längskanten (17a) aufweist, wobei der zweite Abschnitt eine Druckplatte (19) umfasst, die von der freien Seite des U-förmigen Metallkörpers (11), die der Vorderwand (15) gegenüberliegt, mit der Klemmeinrichtung (23) an den Grundkörper (1) gedrückt wird, wobei die Seitenwände (17) eine Vielzahl von Schlitzen (18) mit Anschlagflächen (20) in der Nähe der freien Längskanten (17a) aufweisen, und die Druckplatte (19) eine Vielzahl von Vorsprüngen (25, 26) umfasst, die mit den Anschlagflächen (20) in Eingriff kommen, **dadurch gekennzeichnet, dass** die Vorsprünge (25, 26) eine Vielzahl erster Vorsprünge (25) und zweiter Vorsprünge (26) umfassen, die von einander gegenüberliegenden Längskanten der Druckplatte (19) vorstehen, wobei die zweiten Vorsprünge (26) eine Querausdehnung haben, die geringer ist als die der ersten Vorsprünge (25).

2. Pegelanzeigeeinrichtung nach Anspruch 1, wobei die Querausdehnung der Druckplatte (19) an jedem der zweiten Vorsprünge (26) geringer ist als der Abstand zwischen den Innenflächen der Seitenwände (17).

3. Anzeigeeinrichtung nach Anspruch 2, wobei die ersten und die zweiten Vorsprünge (25, 26) hakenförmig sind.und jeder eine Längsrinne (27), die mit einer Anschlagfläche (20) in Eingriff kommt, sowie eine Kante (28) aufweist, die mit einer Seitenwand (17) in Eingriff kommt.

4. Pegelanzeigeeinrichtung nach einem der Ansprüche 1 bis 3, wobei die Druckplatte (19) Gewindelöcher (21) aufweist und die Klemmeinrichtung durch Schrauben (23) gebildet wird, die in die Gewindelöcher (21) eingeschraubt werden und an den Grundkörper (1) drücken.

5. Anzeigeeinrichtung nach einem der vorangehenden Ansprüche, wobei das transparente Element (9) auf den Längsausschnitt (7) des Grundkörpers (1) aufgesetzt ist und eine erste Dichtung (10) dazwischen angeordnet ist.

6. Pegelanzeigeeinrichtung nach einem der Ansprüche 1 bis 5, wobei eine zweite Dichtung (13) zwischen dem transparenten Elernent (9) und der Vorderwand (15) angeordnet ist.

## Revendications

1. Indicateur mécanique approprié pour mesurer le niveau d'un liquide contenu dans un appareil (5), comprenant un corps de base (1) s'étendant principalement le long d'un axe longitudinal (X-X) à disposer verticalement et ayant une cavité (2), une fenêtre longitudinale (7) qui découvre une partie de la cavité (2) pour inspection du liquide et, au niveau de chaque extrémité, des conduits (3, 4) pour mettre la cavité (2) en communication avec l'appareil (5), un élément transparent (9), une structure de logement tubulaire (11, 19) pour contenir l'élément transparent (9) et le corps de base (1), et des moyens de serrage (23) coopérant avec la structure tubulaire (11, 19) afin d'accoupler l'élément transparent (9) à la fenêtre longitudinale (7) d'une manière étanche et de telle sorte que ladite structure de logement tubulaire (11, 19) et l'élément transparent (9) sont sensiblement parallèles audit axe longitudinal (X-X), la structure tubulaire (11, 19) comprenant une première partie (11) et une seconde partie (19) reliées l'une à l'autre de manière telle à être amovibles transversalement par rapport à l'axe longitudinal (X-X), la première partie (11) ayant une fente (12) pour laisser voir le liquide, et la première partie (11) comprenant un corps de métal sensiblement en forme de U (11) de coupe transversale à angle droit, ayant une paroi avant (15) qui a la fente (12) et deux parois latérales (17) ayant des bords libres longitudinaux (17a), la seconde partie comprenant une plaque de pression (19) à faire avancer contre le corps de base (1) à partir du côté libre du corps de métal en forme de U (11) en face de la paroi avant (15) au moyen desdits moyens de serrage (23), les parois latérales (17) ayant une pluralité de fentes (18) avec des surfaces d'appui (20) à proximité des bords libres longitudinaux (17a), et la plaque de pression (19) comprenant une pluralité d'appendices (25, 26) en prise avec les surfaces d'appui (20), **caractérisé en ce que** les appendices (25, 26) comprennent une pluralité de premiers appendices (25) et seconds appendices (26) faisant saillie à partir des bords longitudinaux de la plaque de pression (19), les seconds appendices (26) ayant une étendue transversale inférieure à celle des premiers appendices (25).

2. Indicateur de niveau selon la revendication 1, dans lequel l'étendue transversale de la plaque de pression (19) avec l'un quelconque des seconds appendices (26) est inférieure à la distance entre les surfaces internes des parois latérales (17).

3. Indicateur selon la revendication 2, dans lequel les premiers et seconds appendices (25, 26) sont en forme de crochet et chacun a une rainure longitudinale (27) en prise avec une surface d'appui (20) et un bord (28) en prise avec une paroi latérale (17).

4. Indicateur de niveau selon l'une quelconque des revendications 1 à 3, dans lequel la plaque de pression (19) a des trous taraudés (21) et les moyens de serrage sont constitués par des vis (23) vissées dans les trous taraudés (21) et s'appuyant sur le corps de base (1).

5. Indicateur selon l'une quelconque des revendications précédentes, dans lequel l'élément transparent (9) est superposé à la fenêtre longitudinale (7) du corps de base (1) avec l'interposition d'un premier joint (10).

6. Indicateur de niveau selon l'une quelconque des revendications 1 à 5, dans lequel le second joint (13) est interposé entre l'élément transparent (9) et la paroi avant (15).
